# EUROPEAN PATENT APPLICATION

(11) **EP 4 350 860 A1**
(43) Date of publication of application: **10.04.2024**
(21) Application number: 22816398.6
(22) Date of filing: 27.05.2022
(51) Int. Cl.: H01M 50/242, H01M 50/249

(54) **SIDE FRAME FOR BATTERY CASE**

(30) Priority: 01.06.2021 KR 20210070559
(71) Applicant: POSCO Co., Ltd, Pohang-si, Gyeongsangbuk-do 37859 (KR)
(72) Inventor: JUNG, Chang-Gyun, Incheon 21985 (KR); PARK, Jae-Heon, Incheon 21985 (KR); CHA, Myung-Hwan, Incheon 21985 (KR); WEE, Sang-Kwon, Incheon 21985 (KR)
(74) Representative: Meissner Bolte Partnerschaft mbB
(86) International application number: PCT/KR2022/007582
(87) International publication number: WO 2022/255739

(57) **Abstract**

The present invention relates to a side frame for a battery case which can enable weight reduction and cost reduction simultaneously while sufficiently protecting battery cells from external shock, and also can fundamentally solve the defects of a weld area by significantly reducing the weld area. The side frame comprises: a first frame part formed to have an open cross-section; and a second frame part coupled to the first frame part by being disposed in the first frame part so as to close the open cross-section of the first frame part, wherein the first frame part and the second frame part are formed of different materials, and the respective corners of the first frame part and the second frame part may be bent.

## Description

### Technical Field

The present disclosure relates to a side frame for a battery case formed of a different material to fundamentally solve defects in a weld area by significantly reducing the weld area, while sufficiently protecting a battery cell from external shocks and simultaneously obtaining weight reduction and cost reduction, as compared to single materials.

### Background Art

For example, a battery system used in an electric vehicle uses various load-bearing members to protect internal battery cells.

A typical example is a side frame of a battery case. The side frame surrounds the battery cell while forming a side wall partitioning a space in which the battery cell is mounted in the battery case, thereby protecting the battery cell from external impacts.

In addition, the side frame allows a mounting frame required for fixing the battery case to the vehicle body to be mounted on the side.

In general, side frames and battery cases are mostly manufactured using aluminum or an aluminum alloy. This is because aluminum has advantages such as the light weight of the material itself, the degree of freedom in molding capable of easily producing a side frame with a complicated cross section using, for example, an extrusion process, and the like.

However, despite the above advantages, aluminum or aluminum alloy is much more expensive than steel, and the extrusion process thereof has a very low production yield, which increases costs.
(Patent Document 1) KR 2019-0131415 A

### Summary of Invention

### Technical Problem

An aspect of the present disclosure is to provide a side frame for a battery case formed of a different material to fundamentally solve defects in a weld area by significantly reducing the weld area, while sufficiently protecting a battery cell from external shocks and simultaneously obtaining weight reduction and cost reduction.

### Solution to Problem

According to an aspect of the present disclosure, a side frame for a battery case includes a first frame part formed to have an open cross-section, and a second frame part disposed within the first frame part to close an open cross-section of the first frame part and coupled to the first frame part, wherein the first frame part and the second frame part are formed of different materials, and a corner portion of each of the first frame part and the second frame part is bent and molded.

### Advantageous Effects of Invention

According to the present disclosure, by forming the side frame with different materials, the advantages of the extruded material and the strength of the rigid material may be evenly utilized, and thus not only is sufficient structural rigidity exhibited, but also weight reductions and cost reductions are obtained.

In addition, according to the present disclosure, by forming the corner portion by bending molding without a weld area, the defect of the weld area may be fundamentally solved by significantly reducing the weld area in the side frame, while obtaining an effect of enhancing impact resistance.

### Brief Description of Drawings

FIG. 1 is a perspective view illustrating a battery case to which a side frame according to an embodiment of the present disclosure is applied.
FIG. 2 is a perspective view illustrating a side frame according to an embodiment of the present disclosure.
FIG. 3 is a cross-sectional view taken along line A-A' of FIG. 2.

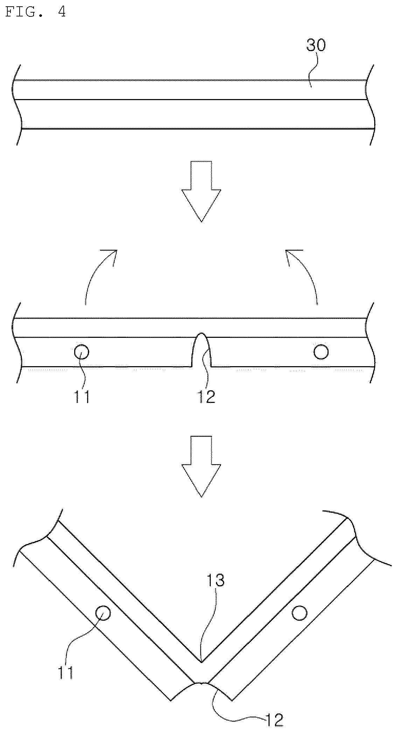

FIG. 4 is a plan view illustrating a step of forming a corner portion of a first frame part.
FIG. 5 provides cross-sectional views illustrating a modified example of a second frame part.
FIG. 6 is a plan view illustrating a step of forming a corner portion of a second frame part.

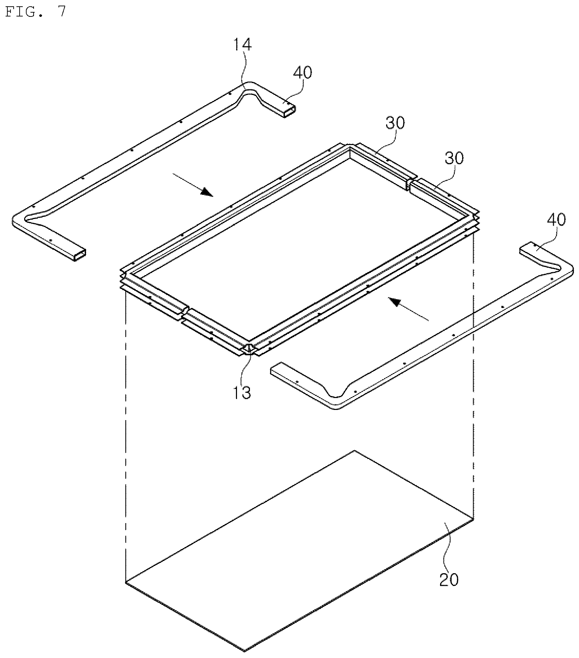

FIG. 7 is a view illustrating a step of assembling a first frame part and a second frame part.

### Best Mode for Invention

Hereinafter, the present disclosure is explained in detail through illustrative drawings. In adding reference numerals to the components of each drawing, it should be noted that the same components have the same numerals as much as possible even if they are displayed on different drawings.

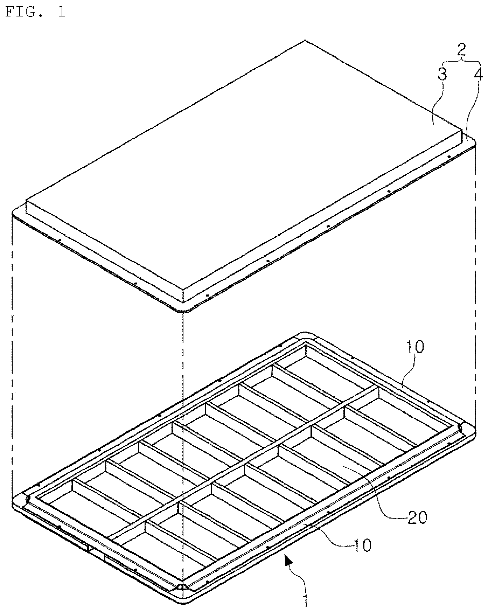

FIG. 1 is a perspective view illustrating a battery case to which a side frame according to an embodiment of the present disclosure is applied.

The battery case may include a first case 1 and a second case 2.

The first case 1 may include a base plate 20 and a side frame 10 surrounding the base plate. The base plate of the first case may serve as a floor material supporting battery cells, and the side frame may constitute a side wall of the first case.

The base plate 20 and the side frame 10 may be integrally coupled to each other by welding or the like. Accordingly, the first case 1 may have a space in the side frame forming a closed cross-section around the base plate.

For example, at least one side frame 10 is provided to surround the base plate 20. Both ends of the side frame may contact corresponding ends of a corresponding different side frame and then coupled thereto by welding or the like, selectively or as necessary.

The second case 2 may include a body 3 formed of a simple flat plate or having a hollow part, and a flange 4 formed on an end of the body. In the case in which the body has a hollow part, the second case may be manufactured by molding a material having appropriate strength into a predetermined shape using a press.

The body 3 of the second case 2 may cover the space of the first case 1 such that the first and second cases are coupled to each other, thereby forming an accommodation space for accommodating the battery cell therein.

The combination of the first and second cases 1 and 2 may be obtained by bolting, for example, by fastening bolts (not illustrated) after the flange 4 formed on the end of the body 3 and the side frame 10 are overlapped with each other.

On the other hand, in evaluating the performance of the battery case, evaluation of side impacts is important. Evaluation of side impacts is performed by impacting the side of a side frame having an approximately quadrangular cross section in the battery case with a cylinder formed of a rigid body to withstand a certain level of impact load. If there is no contact between the side frame and the battery cell until a certain level of impact load is reached, the battery case is evaluated as satisfying crash performance.

In the evaluation of side impacts, the deformation mode of the side frame may be largely divided into a buckling mode at the beginning of the impact and a bending mode at the end of the impact.

The initial collision is an initial collision point of several milliseconds (msec), and at this time, intensive deformation occurs at the contact area of the side frame with the rigid body. At the beginning of the collision, the horizontal member in the width direction (Y-direction) of the cross-sectional structure of the side frame receives intensive force. As a result, if buckling occurs in the horizontal member, the buckling point becomes a plastic hinge, and the horizontal member loses the function thereof as a structural member.

To significantly reduce the phenomenon of buckling and plastic hinge, the thickness of the material constituting the side frame should be thick. For example, since an aluminum material is lighter than steel, it may be designed with a high thickness, but steel is inevitably thin to obtain weight reduction, and thus, the side frame formed of steel is very vulnerable to the buckling mode at the beginning of a collision.

Therefore, the side frame formed of steel is heavier than the side frame formed of aluminum or aluminum alloy and has poor performance.

When the aforementioned buckling mode at the initial stage of the collision ends, the cross-sectional structure of the side frame rapidly collapses, and the concentrated deformation changes to the bending deformation of the entire side frame. That is, the deformation of the side frame is converted into a bending mode in the form of three-point bending, and at this time, the role of the vertical member in the height direction (Z-direction) is much greater than that of the horizontal member among the cross-sectional structures of the side frame.

In the bending mode, the vertical member is subjected to maximum compression or tension, and accordingly, the strength of the vertical member becomes an important factor. For example, a side frame formed of high-strength steel may have increased bending resistance and is advantageous in enduring compressive stress or tensile stress generated in a bending mode.

Due to the deformation characteristics of the side frame, the thickness of the horizontal member is important in the early stage of the collision, and the strength of the vertical member is an important factor in the later stage of the collision. However, none of the single materials satisfies both of the above two conditions.

In addition, a battery case of the related art is provided with a mounting frame coupled to one side of the side frame to fix the battery case to the vehicle body.

In this case, the member that comes into contact with the rigid body first at the beginning of the collision is a mounting frame, and if the side frame is designed to be sufficiently strong, the buckling mode at the beginning of the collision occurs in the mounting frame, not the side frame.

Conversely, if the mounting frame is stronger than the side frame, a buckling mode will occur in the side frame.

Accordingly, the mounting frame also requires mechanical considerations such as the buckling mode at the beginning of the collision, but in general, since the mounting frame and the side frame are manufactured separately and joined together by welding or the like, the battery case inevitably has a structural weakness because the mechanical balance between the mounting frame and the side frame is not correct.

Therefore, in the side frame of the battery case according to the present disclosure, different materials are applied to the horizontal member and the vertical member, and the mounting frame is integrated into the side frame, to satisfy the mechanical characteristics required for the side frame and significantly increase the efficiency of the structure.

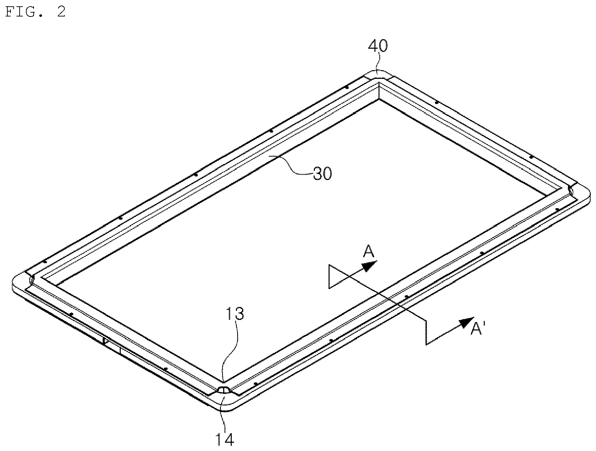

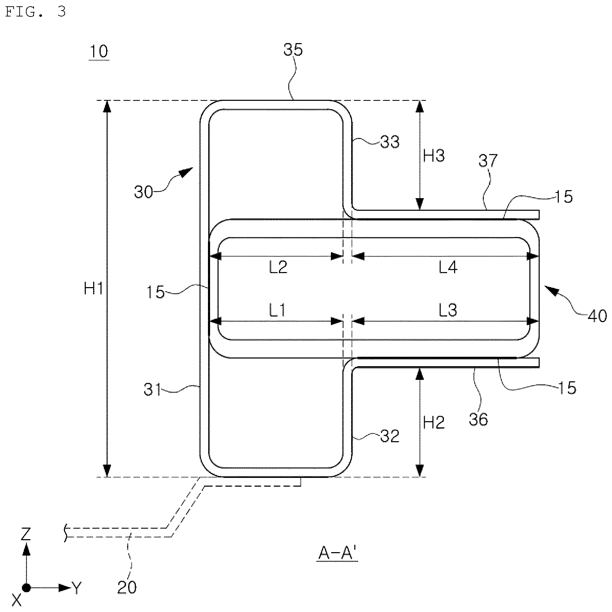

FIG. 2 is a perspective view illustrating a side frame according to an embodiment of the present disclosure, and FIG. 3 is a cross-sectional view taken along line A-A' of FIG. 2.

The side frame 10 according to an embodiment of the present disclosure may include a first frame part 30 and a second frame part 40.

The first frame part 30 may be formed by bending a single plate material having a predetermined width and length several times to have, for example, a T-shaped cross section lying down. Thus, the first frame part may have a hollow portion having an open cross-section therein.

The first frame part 30 may include a first vertical member 31 having a first height H1, a second vertical member 32 spaced apart from the first vertical member by a first length L1 and having a second height H2 shorter than the first height, a third vertical member 33 spaced apart from the second vertical member 32 in the height direction and spaced apart from the first vertical member by a second length L2 and having a third height H3 shorter than the first height, a first horizontal member 34 connecting one end of the first vertical member and one end of the second vertical member, a second horizontal member 35 connecting the other end of the first vertical member and one end of the third vertical member, a third horizontal member 36 having one end connected to the other end of the second vertical member and extending in the width direction by a third length L3, and a fourth horizontal member 37 having one end connected to the other end of the third vertical member and extending in the width direction by a fourth length L4.

The first frame part 30 may be integrally formed by machining a single plate material such as metal or the like.

For example, the plate material extends in the width direction (-Y-direction) by the third length L3 from one end to form the third horizontal member 36, and then, is bent once in the first direction (counterclockwise in FIG. 3). Subsequently, after forming the second vertical member 32 is formed by descending in the height direction (-Z-direction) by the second height H2, and then, is bent once in a second direction (clockwise direction in FIG. 3) opposite to the initial bending direction. After extending in the width direction (-Y-direction) by about the first length L1 to form the first horizontal member 34, it is bent once more in the second direction in the same manner.

Subsequently, after forming the first vertical member 31 by rising in the height direction (Z-direction) by the first height H1, it is bent once in the second direction. The second horizontal member 35 is formed by extending in the width direction (Y-direction) by the second length L2, and is then bent once more in the second direction in the same manner. Subsequently, the third vertical member 33 is formed by descending in the height direction (-Z-direction) by the third height H3 and then bent once in the first direction, which is the initial bending direction. After that, the fourth horizontal member 37 is formed by extending in the width direction (Y-direction) by the fourth length L4.

The method of bending after extending to a predetermined length as described above is repeatedly performed to form an open section along with the required number of horizontal members 34 to 37 and vertical members 31 to 33, and then the plate is terminated at the other end.

Thus, the first frame part 30 may include a wall portion 38 having a first height H1, and a protrusion 39 extending from the wall portion to one side in the width direction (Y-direction) by a third length L3 or a fourth length L4.

The wall portion 38 may be roughly divided into a first vertical member 31, a first horizontal member 34, a second vertical member 32, a second horizontal member 35 and a third vertical member 33. The protrusion 39 may be formed of the third horizontal member 36 and the fourth horizontal member 37 corresponding thereto.

The wall portion 38 corresponds to the existing side frame, while the protrusion 39 corresponds to the existing mounting frame. As a result, in the side frame 10 according to an embodiment of the present disclosure, the mounting frame is integrated into the side frame, and may be integrally formed with the side frame.

In addition, in the first frame part 30, the third horizontal member 36 and the fourth horizontal member 37 are spaced apart from each other by a difference between the first height H1 and the height (H2+H3) obtained by adding the second height H2 and the third height H3, and simultaneously, may have an opening 29 provided between the end of the third horizontal member and the end of the fourth horizontal member.

Accordingly, the protrusion 39 of the first frame part 30 may include the opening 29, and the protrusion and the opening have a height (H1-(H2+H3)) corresponding to the difference between the first height (H1) and the height (H2+H3) obtained by adding the second height (H2) and the third height (H3).

In this case, the plurality of horizontal members (34 to 37) and the plurality of vertical members are not necessarily formed completely horizontally or vertically, but may have an inclination. Accordingly, a separation distance, a height difference or the like may be varied.

Also, optionally, the first length (L1) and the second length (L2) are equal to each other, the second height H2 and the third height H3 are equal to each other, or the third length L3 and the fourth length L4 may be equal to each other.

The first frame part 30 formed in this manner may constitute the outer portion of the side frame 10.

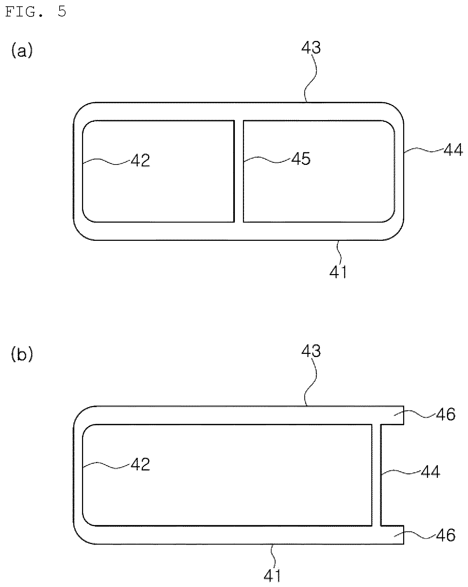

FIG. 5 is a plan view illustrating a step of forming a corner portion of the first frame part.

The first frame part 30 may have an open cross-section and be formed long to have a predetermined length by bending, roll forming, press forming, or the like.

Next, a mounting hole 11 required for fixing to the vehicle body and a notch portion 12 used to smoothly form a corner portion 13 are formed by drilling or cutting.

Finally, using a suitable bending machine, the corner portion 13 is formed by bending the first frame part 30 toward the side where the notch portion 12 opens, to have an angle of approximately 90 degrees.

Accordingly, a single first frame part 30 may be formed integrally, or two first frame parts 30 having substantially U-shapes identically or symmetrically may be formed.

One side of the first frame part 30, the same as the bottom surface of the first horizontal member 34, may be coupled to the base plate 20 by bonding, such as welding. In this manner, only by coupling the first frame part to the base plate by bonding such as welding or the like, the weld area of the first frame part itself may be omitted.

Optionally or as required, the first frame part 30 itself may be welded at a maximum of two places. Moreover, in the related art, a weld area between frame members is located at complex corners, but the first frame part of the present disclosure may be changed such that weld areas are located on simple straight parts, reducing weld areas and facilitating welding at the same time.

In addition, by forming the corner portion 13 of the first frame part 30 through bending without welding, the number of components and the number of processes of the first frame part may be significantly reduced.

The second frame part 40 may be formed of a tubular member having a substantially quadrangular cross-section with a predetermined length formed long and a predetermined height and a predetermined width. As a result, the second frame part may have a hollow portion having a closed cross-section therein.

The second frame part may include a first transverse member 41 and a second transverse member 43 spaced apart from each other in the height direction (Z-direction), and a first longitudinal member 42 and a second longitudinal member 44 spaced apart from each other in the width direction (Y-direction) and connecting the first transverse member and the second transverse member.

In this case, the thickness of the first transverse member 41 and the second transverse member 43 may be formed thicker than the thickness of the first longitudinal member 42 and the second longitudinal member 44. For example, the transverse members may have a thickness three times greater than the longitudinal members.

However, the relative thickness of the transverse members 41 and 43 to the longitudinal members 42 and 44 is not necessarily limited to the above example.

At least the transverse members 41 and 43 of the second frame part 40 may have a thicker thickness than that of the first frame part 30.

The height of the second frame part 40 corresponds to the height of the opening 29 of the first frame part 30, and the width of the second frame part may correspond to the length (L1+L3) obtained by adding the first length L1 of the first horizontal member 31 and the third length L3 of the third horizontal member 33 of the first frame part. Alternatively, the width of the second frame part may correspond to the length (L2+L4) obtained by adding the second length L2 of the second horizontal member 32 and the fourth length L4 of the fourth horizontal member 34 of the first frame part.

The second frame part 40 may be disposed to be aligned with at least the protrusion 39 within the first frame part 30, and may close the open cross-section of the first frame part, that is, the opening 29 to form the entire side frame 10 as a closed cross section.

The second frame part 40 formed and disposed in this manner may constitute the inside of the side frame 10.

FIG. 5 provides cross-sectional views illustrating a modified example of the second frame part.

When the level of demand for collision is high, the second frame part 40 may further include a reinforcing longitudinal member 45 between the transverse members 41 and 43 (see (a) of FIG. 5).

In addition, the first transverse member 41 and the second transverse member 43 have a width direction (Y-direction) length extending longer than a distance between the first longitudinal member 42 and the second longitudinal member 44, thereby forming an extension 46 (see (b) of FIG. 5) .

In this case, the extensions 46 of the transverse members 41 and 43 extending from the second longitudinal member 44 or further extending than the position of the second longitudinal member may serve as flanges for bonding between the first frame part 30 and the second frame portion 40, and may also serve to supplement shock absorption as a buckling mode at the beginning of a collision occurs from the extension.

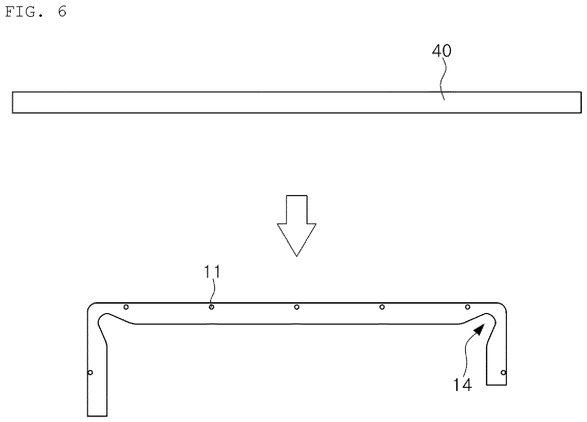

FIG. 6 is a plan view illustrating a step of forming a corner portion of the second frame part.

The second frame part 40 may be formed long to have a predetermined length and have a closed cross-section by extrusion or the like.

Next, using an appropriate bending machine, the second frame part 40 is bent in the same direction at two locations to have an angle of approximately 90 degrees, thereby forming a corner portion 14.

Before or after forming the corner portion 14, the mounting hole 11 required for fixing to the vehicle body or a coupling hole required for coupling with the first frame part 30 is formed by drilling.

As a result, two second frame parts 40 having substantially '⊏'-shapes identically or symmetrically may be formed.

In this manner, since no welding is required to form the second frame part 40, the second frame part has the advantage of being able to omit the weld area.

In addition, by forming the corner portion 14 of the second frame part 40 through bending without welding, the number of parts and the number of processes of the second frame part may be significantly reduced.

In the side frame 10 according to an embodiment of the present disclosure, the first frame part 30 and the second frame part 40 may be formed of different materials.

For example, the first frame part 30 may be formed of a heavy metal material having a specific gravity of 4 or more, such as steel or the like. The second frame part 40 may be formed of a material having a lower specific gravity than the first frame part.

Alternatively, the second frame part 40 may be formed of a material having a higher specific strength than the first frame part 30.

In more detail, the first frame part 30 adopts ultra-high-strength steel of 1 GPa or higher, such that an optimal combination for reducing the weight of the side frame 10 and the battery case may be obtained.

For example, the first frame part 30 may be formed of a plate material such as 1470 Martensitic (MART) steel, 1180 Complex Phase (CP) steel or the like having a thickness of about 0.5 mm to 1.5 mm produced by the present applicant.

In this case, 1470 MART steel is a steel grade having a tensile strength of 1,470 MPa or more and a yield strength of 1, 050 MPa or more to improve crash safety, and 1180 CP steel is a steel grade to guarantee a tensile strength of 1180 MPa or more and a yield strength of 850 MPa or more and improve bending workability.

In addition, the second frame part 40 may be formed of a material that may be molded by extrusion, for example, a light metal such as aluminum or the like, or an alloy thereof, plastic, composite material, or the like.

In this manner, since the first frame part 30 and the second frame part 40 are formed of different materials, the first frame part and the second frame part may be coupled to each other by mechanical bonding through fixtures such as rivets (e.g., blind rivets), screws (e.g., flow drill screws) or the like, and chemical bonding through adhesives 15 such as structural adhesives or the like.

When assembling the side frame 10 according to an embodiment of the present disclosure, first, while the separately molded first frame part 30 and second frame part 40 are relatively moved in the width direction (Y-direction) with respect to each other, the second frame part may be fitted to the protrusion 39 in the first frame part.

Subsequently, an adhesive 15 may be interposed between the third horizontal member 36 of the first frame part 30 and the first transverse member 41 of the second frame part 40 and between the fourth horizontal member 37 of the first frame part and the second transverse member 43 of the second frame part, thereby performing bonding therebetween.

In addition, the adhesive 15 may be interposed between the first vertical member 31 of the first frame part 30 and the first longitudinal member 42 of the second frame part 40 to be bonded to each other.

This adhesive 15 not only bonds between the first frame part 30 and the second frame part 40, and for example, when the first frame part is formed of steel and the second frame part is formed of aluminum material, an effect capable of preventing corrosion caused by direct contact between these dissimilar materials may be obtained.

Of course, the assembly method is not necessarily limited to the above example, and fixtures such as rivets or screws and the adhesive 15 such as structural adhesives or the like are combined together and may be used to combine the first frame part 30 and the second frame part 40.

In this manner, welding is not required when assembling the first frame part 30 and the second frame part 40, and thus in the side frame 10 according to an embodiment of the present disclosure, there is an advantage that the weld area may be significantly reduced and the assembling may be facilitated.

Accordingly, in the side frame 10 according to an embodiment of the present disclosure, the second frame part 40 formed of a lightweight material may provide additional transverse members (i.e., the transverse members 41 and 43) within the first frame part 30 of high strength material, or may further add at least the thickness of the third and fourth transverse members 36 and 37.

In addition, in the side frame 10 according to an embodiment of the present disclosure, the second frame part 40 formed of a lightweight material surrounds the side portions of the battery case and the battery cell, and thus structural stability may be improved.

The side frame 10 according to an embodiment of the present disclosure includes the first frame part 30 and the second frame part 40 formed of different materials, and a lightweight material is disposed in a portion requiring a thick horizontal member, and a high-strength material is disposed in the vertical member requiring strength. In addition thereto, there is an advantage of implementing a very efficient structure with a high-performance and low-cost by integrating the mounting frame with the side frame.

Thus, buckling and plastic hinge phenomena may be prevented by the thick horizontal member in the early stage of a collision, and at the later stage of the collision, the high-strength vertical member may respond to the bending deformation.

In addition, in consideration of the role of the mounting frame that receives the first impact, the horizontal member is extended to the position of the existing mounting frame and the outer side is surrounded by high-strength material, such that the mechanical characteristics may be satisfied and the efficiency of the structure may be significantly increased only with the side frame.

The present applicant performed performance analysis through simulation with respect to the side frame according to an embodiment of the present disclosure.

For example, with respect to the ability to withstand a certain level of impact load by impacting the side of the side frame with a cylinder formed of a rigid body, a side frame of the related art formed of a single material and a side frame formed of different materials according to an embodiment of the present disclosure were compared.

As a result, despite having a similar weight, it was confirmed that the side frame of the present disclosure exhibited twice or more performance.

Therefore, when designing to implement equivalent levels of performance, the side frame formed of different materials according to an embodiment of the present disclosure may have a significantly reduced weight compared to the side frame formed of a single material, and according to the analysis results through simulation, it was confirmed that a weight reduction effect of up to 20% may be obtained.

As described above, according to the present disclosure, by forming the side frame with a different material, the strengths of extruded materials and strengths of rigid materials may be utilized evenly, so that not only sufficient structural rigidity may be exhibited, but also the effect of reducing weight and cost may be obtained.

In addition, according to the present disclosure, by forming a corner portion by bending molding without a weld area, the weld area may be significantly reduced in the side frame, and thus the defect of the weld area may be fundamentally solved, while obtaining the effect of enhancing the impact resistance.

The above description is merely an example of the technical idea of the present disclosure, and various modifications and variations may be made to those skilled in the art without departing from the essential characteristics of the present disclosure.

In this specification and drawings, the horizontal member of the first frame part and the transverse member of the second frame part, and the vertical member of the first frame part and the longitudinal member of the second frame part are used only for the purpose of distinguishing terms, and it should be noted that it does not have any other technical meaning.

Therefore, the embodiments disclosed in the present specification and drawings are not intended to limit the technical spirit of the present disclosure, but to explain, and the scope of the technical spirit of the present disclosure is not limited by these embodiments. The scope of protection of the present disclosure should be construed according to the claims below, and all technical ideas within the scope equivalent thereto should be construed as being included in the scope of the present disclosure.

### DESCRIPTION OF REFERENCE CHARACTERS

| | | | |
|---|---|---|---|
| 1: | first case | 2: | second case |
| 3: | body | 4: | flange |
| 10: | side frame | 11: | mounting hole |
| 12: | notch portion | 13, 14: | corner portion |
| 15: | adhesive | 20: | base plate |
| 29: | opening | 30: | first frame part |
| 31: | first vertical member | 32: | second vertical member |
| 33: | third vertical member | 34: | first horizontal member |
| 35: | second horizontal member | 36: | third horizontal member |
| 37: | fourth horizontal member | 38: | wall portion |
| 39: | protrusion | 40: | second frame part |
| 41 | first transverse member | 42 | first longitudinal member |
| 43 | second transverse member | 44 | second longitudinal member |
| 45: | reinforcing longitudinal member | 46: | extension |

## Claims

1. A side frame for a battery case, comprising:
a first frame part formed to have an open cross-section; and
a second frame part disposed within the first frame part to close an open cross-section of the first frame part and coupled to the first frame part,
wherein the first frame part and the second frame part are formed of different materials, and
a corner portion of each of the first frame part and the second frame part is bent and molded.

2. The side frame for a battery case of claim 1, wherein the first frame part includes,
a first vertical member having a first height;
a second vertical member spaced apart from the first vertical member by a first length and having a second height shorter than the first height;
a third vertical member spaced apart from the first vertical member by a second length while being spaced apart from the second vertical member in a height direction, and having a third height shorter than the first height;
a first horizontal member connecting one end of the first vertical member and one end of the second vertical member;
a second horizontal member connecting the other end of the first vertical member and one end of the third vertical member;
a third horizontal member having one end connected to the other end of the second vertical member and extending in a width direction by a third length; and
a fourth horizontal member having one end connected to the other end of the third vertical member and extending in the width direction by a fourth length, and
an opening is formed between the other end of the third horizontal member and the other end of the fourth horizontal member.

3. The side frame for a battery case of claim 2, wherein the first frame part includes,
a wall portion having the first height; and
a protrusion extending from the wall portion to one side in the width direction by the third length or the fourth length, and
the opening is formed in one side of the protrusion.

4. The side frame for a battery case of claim 3, wherein the second frame part is disposed on at least the protrusion in the first frame part, and closing the opening.

5. The side frame for a battery case of claim 4, wherein the second frame part is coupled by mechanical bonding through a fixture or chemical bonding through an adhesive in the first frame part.

6. The side frame for a battery case of claim 1, wherein a notch portion for bending is formed at the corner portion of the first frame part.

7. The side frame for a battery case of claim 1, wherein the second frame part includes,
a first transverse member and a second transverse member spaced apart from each other in a height direction; and
a first longitudinal member and a second longitudinal member spaced apart from each other in a width direction and connecting the first transverse member and the second transverse member.

8. The side frame for a battery case of claim 7, wherein a thickness of the first transverse member and the second transverse member is formed thicker than a thickness of the first longitudinal member and the second longitudinal member.

9. The side frame for a battery case of claim 7, wherein the first transverse member and the second transverse member have a thicker thickness than the first frame part.

10. The side frame for a battery case of claim 7, wherein the second frame part further comprises a reinforcing longitudinal member between the first transverse member and the second transverse member.

11. The side frame for a battery case of claim 7, wherein the first transverse member and the second transverse member form an extension extending beyond a distance between the first longitudinal member and the second longitudinal member.

12. The side frame for a battery case of any one of claims 1 to 11, wherein the second frame part is formed of a material having a lower specific gravity than the first frame part.

13. The side frame for a battery case of any one of claims 1 to 11, wherein the second frame part is formed of a material having a higher specific strength than the first frame part.

14. The side frame for a battery case of any one of claims 1 to 11, wherein the first frame part is formed by bending a single plate material, and
the second frame part is formed by extrusion.
